(19) Europäisches Patentamt / European Patent Office / Office européen des brevets

(11) **EP 3 232 080 B1**

(12) **EUROPÄISCHE PATENTSCHRIFT**

(45) Veröffentlichungstag und Bekanntmachung des Hinweises auf die Patenterteilung:
**28.09.2022 Patentblatt 2022/39**

(21) Anmeldenummer: **17000498.0**

(22) Anmeldetag: **27.03.2017**

(51) Internationale Patentklassifikation (IPC):
*F16F 3/087* *(2006.01)*

(52) Gemeinsame Patentklassifikation (CPC):
**F16F 3/0876**

(54) **FEDER-DÄMPFERSYSTEM AUS MEHREREN HINTEREINANDER ANGEORDNETEN FEDER-DÄMPFERELEMENTEN**

SPRING-SHOCK ABSORBER SYSTEM FROM A PLURALITY OF SPRING DAMPER ELEMENTS ARRANGED ONE BEHIND THE OTHER

SYSTÈME RESSORT-AMORTISSEUR CONSTITUÉ DE PLUSIEURS ÉLÉMENTS RESSORT-AMORTISSEUR DISPOSÉS LES UNS DERRIÈRE LES AUTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2016 DE 102016003607**

(43) Veröffentlichungstag der Anmeldung:
**18.10.2017 Patentblatt 2017/42**

(73) Patentinhaber:
• **Zimmer, Günther**
  **77866 Rheinau (DE)**
• **Zimmer, Martin**
  **77866 Rheinau (DE)**

(72) Erfinder:
• **Zimmer, Günther**
  **77866 Rheinau (DE)**
• **Zimmer, Martin**
  **77866 Rheinau (DE)**

(74) Vertreter: **Thämer, Wolfgang**
  **Zürn & Thämer**
  **Patentanwälte**
  **Hermann-Köhl-Weg 8**
  **76571 Gaggenau (DE)**

(56) Entgegenhaltungen:
EP-A1- 0 019 533     EP-A1- 2 184 508
BE-A- 355 901     DE-A1- 2 734 501
GB-A- 2 079 400     US-A- 2 639 141
US-A- 4 200 268     US-A1- 2010 059 470

**Beschreibung**

Die Erfindung betrifft ein Feder-Dämpfersystem aus mehreren hintereinander angeordneten Feder-Dämpferelementen, die entlang mindestens eines Führungselements geführt sind.

Zum Dämpfen und Abfedern von Maschinenschlitten, die horizontal, vertikal oder schräg im Raum gelagert und geführt sind, werden oft einfache, wartungsarme und ggf. wetterfeste Systeme benötigt. Solche Systeme sollen beispielsweise auch im Aufzugsbau, in manntragenden Körben von Fassadenreinigungsvorrichtungen oder in Sicherungsvorrichtungen von Industriekletterern verwendbar sein.

Aus dem Lehrbuch "Decker, Maschinenelemente; Gestaltung und Berechnung" des Carl Hanser Verlags, München, 12. Auflage, Seiten 251 und 252, ist das Hintereinanderschalten von Schraubendruckfedern unter Verwendung von zwischen den Schraubendruckfedern angeordneten Platten bekannt.

Aus der noch unveröffentlichten DE 10 2009 012 684 A1 ist ein Rückstoßdämpfungssystem für eine Schulterstütze bekannt, bei dem zwei Feder-Dämpferelemente hintereinander angeordnet sind.

Die EP 2 184 508 A1 beschreibt ein Feder-Dämpfersystem, bei dem die Feder-Dämpferelemente über Reibringe sowohl an einer zentralen Stange als auch in einem diese Stange umgebenden Rohr geführt sind. Jeder aus einem elastischen und kompressiblen Material bestehender Elastomerkörper ist hierbei einmal außen und einmal innen geführt. Die Elastomerkörper stützen sich hierbei nicht an einem gemeinsamen Zwischenstützelement ab.

Aus der EP 0 019 533 A1 ist ein Feder-Dämpfersystem bekannt, bei dem die einzelnen Feder-Dämpferelemente sich nur über eine zentrale Scheibe an einer Führungsstange abstützen.

Die GB 2 079 400 A zeigt eine Kolbenstangedämpfung mit Gummikugeln. Die Gummikugeln liegen über ihre Bohrungen auf der Kolbenstange vollflächig auf, während sie außen zusätzlich in einen Zylinder anliegen. Jede Gummikugel hat vorn und hinten ein separates Führungselement.

Aus der US 2010/059 470 A1 ist ein Feder-Dämpfersystem bekannt, bei dem Gummischeiben mit ihren Bohrungen auf einer zentralen Stange geführt sind. Zwischen den Gummischeiben liegen Blechscheiben.

Die US 4 200 268 A beschreibt eine Zylinder-Kolben-Einheit, in deren Zylinderraum beidseits des Kolbens vierfachgestapelte Elastomerringe zwischen Blechscheiben eingespannt sind. Die Belastung Meerenge und die Blechscheiben sind nicht an der Kolbenstange oder der Zylinderwandung geführt.

Aus der US 2 639 141 A ist ebenfalls eine Zylinder-Kolben-Einheit bekannt, bei der eine zugbelastete Kolbenstange gegenüber dem Zylinder durch vier gestapelte Gummielemente abgefedert ist. Jedes Gummielement hat vorn und hinten eine an der Kolbenstange geführte.

Der vorliegenden Erfindung liegt die Problemstellung zugrunde, ein derartiges Feder-Dämpfersystem zu entwickeln, das einfach und sicher funktioniert und zudem aus wenigen verschiedenen aber vielen gleichartigen Bauteilen besteht.

Diese Problemstellung wird mit den Merkmalen des Hauptanspruchs gelöst. Dabei sind das oder die Führungselemente starre Führungsprofile oder biegbare Zugmittel. Das jeweilige Feder-Dämpferelement ist in Form eines Strukturdämpfers ausgebildet. Die sich zwischen den Stirnseiten des Feder-Dämpferelement gelegene im mittleren Bereich nach außen gewölbte Innenausnehmung eines Feder-Dämpferelements umschließt das oder die Führungselemente. Zwischen jeweils zwei hintereinander angeordneten Feder-Dämpferelementen ist ein Zwischenstützelement angeordnet. Die Zwischenstützelemente sind an den Führungselementen gleitfähig geführt. Das einzelne Zwischenstützelement hat einen Teller, an dessen Stirnseiten jeweils ein Feder-Dämpferelement anliegt. Es hat eine Gleithülse, deren Bohrung oder Ausnehmung das jeweilige Führungselement kontaktiert und an dessen radialer Außenwandung das jeweilige Feder-Dämpferelement zumindest bereichsweise anliegt.

Die Feder-Dämpferelemente werden z.B. auf einem Führungselement wechselweise mit speziellen Zwischenstützelementen aufgereiht. Beispielsweise beim gedämpften Abfedern einer vertikal fallenden Last, liegt das unterste Zwischenstützelement ortsfest auf. Ggf. ist dieses Zwischenstützelement am Führungselement befestigt oder in sonstiger Weise fest angeordnet. Über diesem Zwischenstützelement stapeln sich die restlichen Zwischenstützelemente, jeweils durch ein Feder-Dämpferelement voneinander beabstandet. Auf dem obersten Feder-Dämpferelement liegt wiederum ein Zwischenstützelement auf. Alternativ können das unterste und das oberste Zwischenstützelement jeweils durch ein spezielles, an die Aufgabe und Funktion angepasstes Endstützelement ersetzt werden.

Die fallende Last gleitet entlang dem Führungselement in Schwerkraftrichtung nach unten, um am Hubende am oberen Zwischen- oder Endstützelement aufzusitzen und die gekoppelten bzw. gestapelten Feder-Dämpferelemente energieabsorbierend zusammenzuschieben.

Der größte Teil der Energie der Last wird in den in Reihe geschalteten Strukturdämpfern in Federenergie und Wärme umgewandelt. Die Wärme entsteht durch innere Reibung im Material des Strukturdämpfers. Die kurzzeitig gespeicherte Federenergie der gekoppelten Strukturdämpfer wird nach dem Abfedern der Last durch ein teilweises Dekomprimieren der Strukturdämpfer in Form eines geringfügigen Anhebens der Last wieder freigegeben. Wird die Last von den Strukturdämpfern weggefahren, so entspannen sich letztere vollständig. Dies ist möglich, da die Zwischenstützelemente und ggf. mindestens eines der Endstützelemente reibungsarm auf dem Führungselement geführt sind.

Da das Material des einzelnen Strukturdämpfers weitgehend inkompressibel ist, kann dieser beim Dämpfen nur seine Gestalt aber nicht sein Volumen ändern.

Anstelle der in den Ausführungsbeispielen verwendeten gleichartigen Strukturdämpfer pro System können auch mehrere verschiedenartige Strukturdämpfer entlang eines Führungselements angeordnet werden. Die einzelnen Strukturdämpfer können sich hierbei sowohl in der geometrischen Gestalt als auch in den Werkstoffeigenschaften unterscheiden, um in der Kombination eine bestimmte Funktion präzise zu erfüllen.

Auch ist es möglich, Strukturdämpfer, deren Querschnittsbreite z.B. größer ist als deren Querschnittstiefe, an zwei parallelen, zueinander beabstandeten Führungselementen zu führen. Strukturdämpfer mit großen Querschnitten können ferner an drei oder mehr parallelen Führungselementen geführt werden. In der Regel ist hierbei der Querschnitt des Strukturdämpfers immer größer als die Summe der Einzelquerschnitte der verwendeten Führungselemente.

Weitere Einzelheiten der Erfindung ergeben sich aus den Unteransprüchen und der nachfolgenden Beschreibung mindestens einer schematisch dargestellten Ausführungsform.

| | |
|---|---|
| Figur 1: | perspektivische Ansicht eines Feder-Dämpfersystems mit hintereinander angeordneten Strukturdämpfern; |
| Figur 2: | Längsschnitt zu Figur 1; |
| Figur 3: | Längsschnitt zu Figur 1, jedoch mit ungeradem und/oder flexiblem Führungselement; |
| Figur 4: | schräge Vorderansicht eines Strukturdämpfers nach Figur 1; |
| Figur 5: | schräge Rückansicht zu Figur 4; |
| Figur 6: | perspektivische Ansicht eines Zwischenstützelements nach Figur 1; |
| Figur 7: | Längsschnitt eines Feder-Dämpfersystems mit strukturdämpferhintergreifenden Zwischenstützelementen; |
| Figur 8: | perspektivische Ansicht eines Zwischenstützelements mit Be- und Entlüftungskerbe für das System nach Figur 1; |
| Figur 9: | perspektivische Ansicht eines Zwischenstützelements mit Hintergriffselementen nach Figur 7; |
| Figur 10: | Längsschnitt eines Feder-Dämpfersystems mit taillierten Strukturdämpfern; |
| Figur 11: | schräge Vorderansicht eines Strukturdämpfers nach Figur 10 und 15; |
| Figur 12: | schräge Rückansicht zu Figur 11; |
| Figur 13: | perspektivische Ansicht eines Zwischenstützelements von schräg vorn nach Figur 10; |
| Figur 14: | perspektivische Ansicht eines Zwischenstützelements von schräg hinten nach Figur 10; |
| Figur 15: | Längsschnitt eines Feder-Dämpfersystems mit taillierten Strukturdämpfern und Zwischenstützelementen mit Hintergriffselementen; |
| Figur 16: | perspektivische Ansicht eines Zwischenstützelements nach Figur 15 von schräg vorn; |
| Figur 17: | perspektivische Ansicht eines Zwischenstützelements nach Figur 15 von schräg hinten; |
| Figur 18: | Längsschnitt der auf Block zusammengeschobenen Feder-Dämpfersystemelemente des Systems nach Figur 2. |

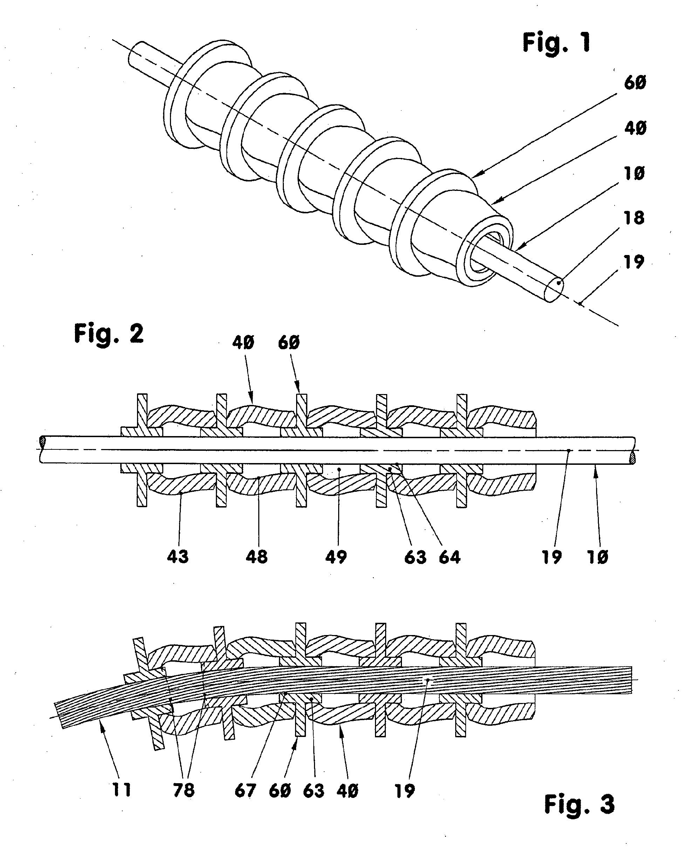

Die Figuren 1 und 2 zeigen ein Feder-Dämpfersystem mit vielen hintereinander angeordneten Feder-Dämpferelementen (40). Zwischen je zwei Feder-Dämpferelementen (40) ist ein im Wesentlichen scheibenförmiges Zwischenstützelement (60) eingefügt. Über die Zwischenstützelemente (60) sind die Feder-Dämpferelemente (40) in den Ausführungsbeispielen an einem Führungselement (10) gelagert und geführt.

Die in den Figuren 1, 2, 10, 15 und 18 gezeigten Führungselemente (10) sind glattwandige Führungsstangen mit jeweils kreisrundem Querschnitt (18). Die Führungsstangen (10) sind beispielsweise aus einem nichtrostenden Stahl gefertigt. Sie können auch unrunde Querschnitte haben, wie sie z.B. bei einem Vieleckprisma oder bei einem Polygonprofil zu finden sind. Ferner sind Rechteckquerschnitte, Oval- oder Ellipsenquerschnitte, Halbrundquerschnitte oder andere Querschnitte möglich, die ggf. ein Verdrehen der geführten Bauteile verhindern können.

Die Führungsstangen (10) sind in der Regel geradlinige und formsteife Führungselemente. Sie können jedoch auch entlang einer zwei- oder dreidimensionalen Bahnkurve gekrümmt sein. Allerdings hat die Mittellinie (19) der Führungsstange (10) an keiner Stelle zwei Tangenten.

Nach Figur 3 ist das Führungselement (11) ein Drahtseil, z.B. ein linksgängiges Gleichschlagseil nach DIN EN 12385-2. Vorzugsweise können verdichtete Litzen oder halb- oder vollverschlossene Spiralseile verwendet werden.

Anstelle eines Drahtseiles (11) kann auch ein Zugmittel in Form einer Gelenk- oder Gliederkette, z.B. eine Rollenkette nach DIN ISO 1275, eingesetzt werden. Auch ein Flachriemen ist als Zugmittel denkbar.

Auf dem Führungselement (10, 11) sind u.a. die Feder-Dämpferelemente (40, 50) hintereinander aufgereiht. Nach den Figuren 1 bis 3, 7, 10, 15 und 18 sind es jeweils nur beispielhaft fünf Feder-Dämpferelemente (40, 50). Letztere sind als Strukturdämpfer ausgebildet. Sie gehören zur Gruppe der Axialdämpfer. Der einzelne Strukturdämpfer (40, 50) hat in den Ausführungsbeispielen im unverformten Zustand eine Länge von z.B. 35,6 mm bei einem maximalen Außendurchmesser von 47 mm.

Der einzelne Strukturdämpfer (40) hat die Form eines Rohres mit tonnenförmiger Wandung, vgl. Figuren 1 bis 5 und 7. Trotz eines entlang seiner Längsausdehnung veränderlichen Querschnitts, variiert seine Wandstärke - außerhalb der stirnseitigen Anfasungen - entlang dieser Längsausdehnung nur im 1 bis 5-Prozentbereich. Die Längsausdehnung verläuft hierbei entlang der Mittellinie (19) des jeweiligen Führungselements (10, 11).

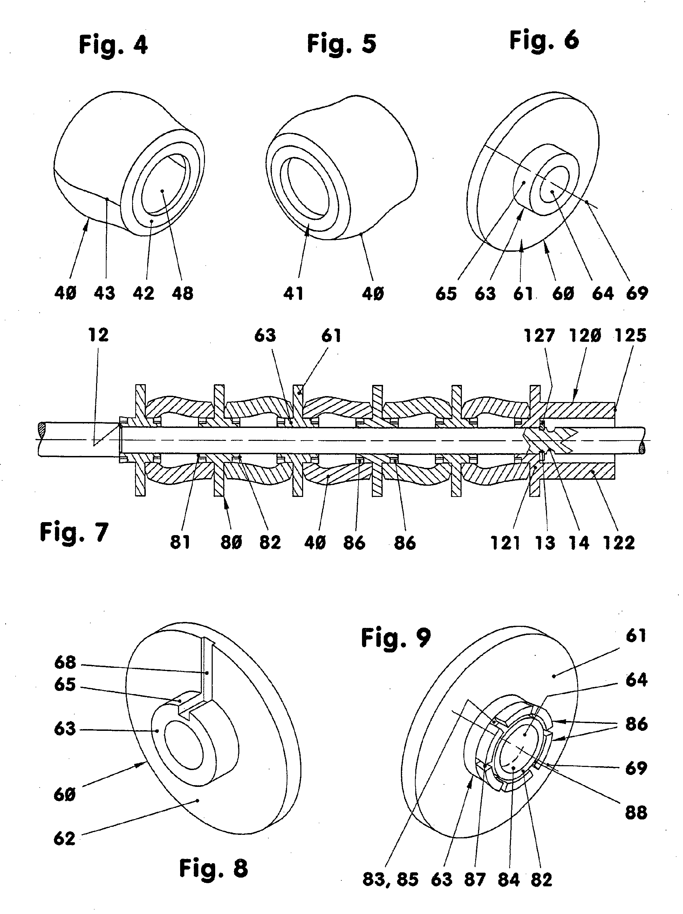

Die mittlere Wandstärke liegt z.B. bei 8,5 mm. Die Wandstärke misst z.B. 18 ± 5 % des maximalen Durchmessers des jeweiligen Strukturdämpfers. Der minimale Durchmesser der zentralen Strukturdämpferausnehmung - er liegt jeweils in unmittelbarer Nähe der jeweiligen Stirnseite (41, 42) - beträgt bei den Ausführungsbeispielen der Figuren 2 und 7 ca. 23,6 mm. Zwischen den Stirnseiten (41, 42) erstreckt sich die im mittleren Bereich nach außen gewölbte Innenausnehmung (48), vgl. auch Figuren 4 und 5.

Der maximale Durchmesser der tonnenförmigen Außenwandung (43) ist von der linken Stirnseite (41) ca. 1/3 der unverformten Strukturdämpferlänge entfernt. Der Krümmungsradius beträgt an dieser Stelle ca. 16,6 mm.

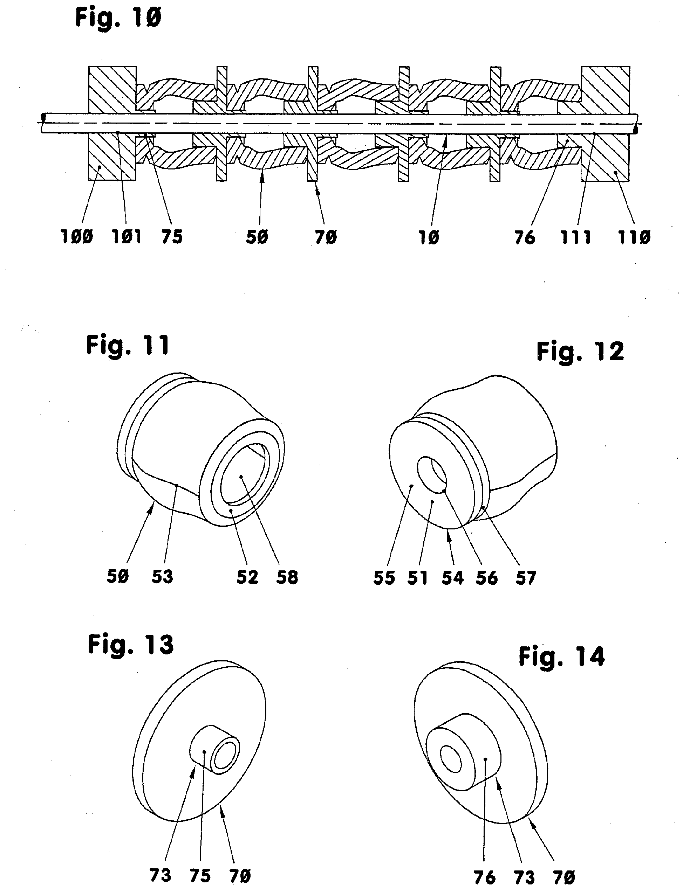

Die Figuren 10 bis 12 und 15 zeigen einen topfartigen Strukturdämpfer (50), der näherungsweise eine glockenförmige Wandung aufweist. Im Bereich der linken Stirnseite (51) hat er eine Bodenscheibe (54) mit einer planen Bodenfläche (55), die sich im Bereich der Außenwandung (53) durch eine Taille (57) von der äußeren Glockenform abgrenzt. Die Bodenscheibe (54) hat eine zentrale Bohrung (56), die z.B. 14 mm misst. Die Geometrie der Innenausnehmung (58) des Strukturdämpfers (50) entspricht im Bereich der rechten Stirnseite (52) der Geometire der Innenausnehmung (48) des Strukturdämpfers (40). Die groben Außenmaße, die Wandstärken und die Krümmungsverhältnisse des Strukturdämpfers (50) entsprechen im Bereich einer 1 bis 5 prozentigen Abweichung denen des Strukturdämpfers (40).

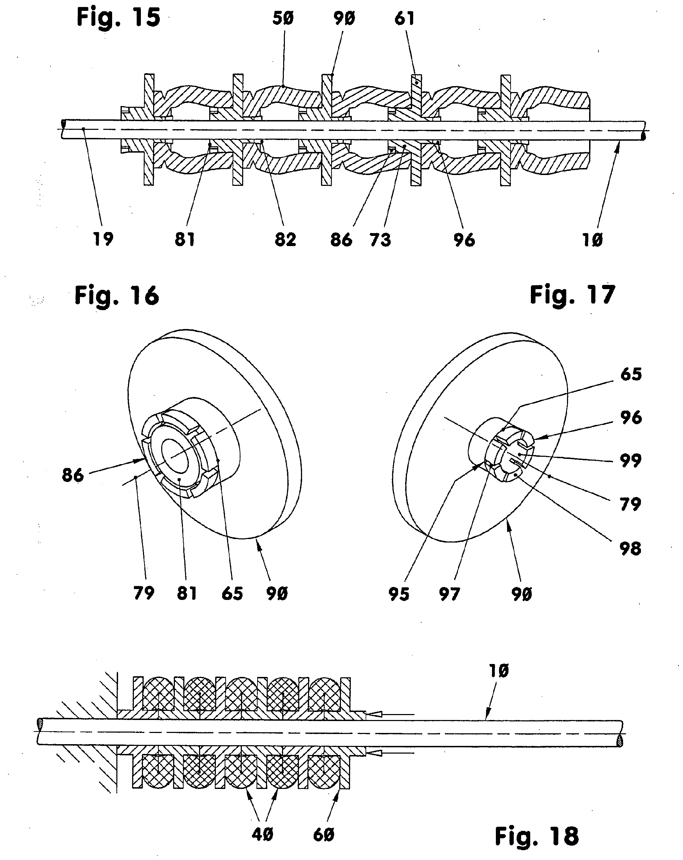

Die taillenartige Einschnürung (57) erleichtert das Zusammenfalten der Topfwandung unter axialer Belastung. Der Strukturdämpfer wird zur Dämpfung und Abfederung - bei einer Kompression in Längsrichtung der Mittellinie (19) - in Axial- und Radialrichtung verformt. Die Topfwandung beult im mittleren Bereich nach außen, wodurch sich der jeweilige Innenwandungbereich zusammenfaltend aneinanderlegt, vgl. auch Figur 18. Allerdings ist dort der maximal verformte Strukturdämpfer (40) dargestellt. Große Bereiche der Außenwandung legen sich an den großen Tellerflächen (62) der Zwischenstützelemente (60) an. Sowohl im unverformten als auch im unter Last verformten Zustand kontaktieren die Strukturdämpfer (40, 50) nicht das oder die Führungselemente (10, 11).

Als Werkstoff wird für die Strukturdämpfer (40, 50) ein auf CoPolyester basierter thermoplastischer Elastomer (TPC) verwendet, z.B. Hytrel ®. Seine Härte in Shore liegt zwischen 40D und 55D. Der einzelne Strukturdämpfer absorbiert beispielsweise ca. 52% der Lastabfangenergie. Der Rest wird für das Rückfedern benutzt. Nach jeder funktionsbedingten Verformung erlangt er wieder seine ursprüngliche, konstruktionsbedingte geometrische Form.

In den Figuren 1 bis 3, 10, 15 und 18 sind die Strukturdämpfer (40, 50) gleichsinnig hintereinander angeordnet. Sie sind entlang des jeweiligen Führungselements (10, 11) auch wechselweise positionierbar, vgl. Figur 7.

Gemäß Figur 2 stützen sich die Feder-Dämpferelemente (40) beidseitig an Zwischenstützelementen (60) ab. Das zu seiner - normal zur Mittellinie (19) des Führungselements (10) gelegenen - Mittelebene symmetrisch gestaltete Bauteil (60) besteht aus einem z.B. einteiligen, scheibenförmigen Teller (61), der an einer beidseits des Tellers (61) überstehenden Gleithülse (63) angeformt ist. Ggf. können die hier plan dargestellten axialorientierten Tellerflächen (62) eine Balligkeit oder eine sphärische Krümmung aufweisen, wobei die konvexe Seite der Krümmung dem jeweils anliegenden Strukturdämpfer (40, 50) zugewandt ist.

Die auf der Führungsstange (10) mit einem Spiel von 0,1 bis 0,2 mm geführte Gleithülse (63) hat z. B. bei einem Außendurchmesser von 23,8 mm eine Länge vom 21,5 mm. Die Führungsstange (10) selbst hat hier einen Außendurchmesser von 14 mm. Die Bohrung (64) der Gleithülse (63) ist feinbearbeitet. Der mittig auf der Gleithülse (63) angeformte Teller (61) hat bei einem Außendurchmesser von 59 mm eine Wandstärke von z. B. 5 mm.

Der Außendurchmesser des Tellers (61) ist beispielsweise so bemessen, dass er immer größer ist als der maximale Außendurchmesser des einzelnen, maximal gestauchten Strukturdämpfers (40, 50), vgl. Figur 18. In letzterem Fall kontaktieren sich die Gleithülsenstirnseiten der Zwischenstützelemente (60).

Die Zwischenstützelemente (60) werden beispielsweise aus einem formsteifen Kunststoff, wie z.B. ABS, oder aus einem Eisen- oder Buntmetallwerkstoff gefertigt.

Im zusammengebauten Feder-Dämpfersystem sitzen die Strukturdämpfer (40) mit den stirnseitennahen Bereichen der Innenausnehmung - z.B. geringfügig gedehnt unter Zugspannung - auf der jeweiligen radialen Außenwandung (65) der Gleithülse (63). Zugleich liegen sie mit ihren Stirnseiten (41, 42) an den Planflächen (62) der Teller (61) an.

In Figur 8 ist das Zwischenstützelement (60) mit einer eingearbeiteten Winkelnut (68) dargestellt. Ein Teil der Winkelnut (68) bildet einen Kanal in der Tellerfläche (62), während der andere Teil eine Nut in der Gleithülse (63) ist. Die Winkelnut (68) verhindert u.a. das Aufbauen eines bremsenden Staudrucks im Innenraum (49) der Strukturdämpfer (40, 50) bei dessen Zusammenschieben. Prinzipiell reicht pro Zwischenstützelement (60) eine Winkelnut (68). Es können aber auch pro Zwischenstützelementseite mehrere Winkelnuten oder Kanäle für die Be- und Entlüftung der Innenräume (49) der Strukturdämpfer (40, 50) angeordnet werden.

Für den Anwendungsfall nach Figur 3 werden die zentralen Bohrungen der Zwischenstützelemente (60) durch Ausnehmungen (67) ersetzt. Diese Ausnehmungen (67) weiten sich, gemäß der Schnittdarstellung nach Figur 3, ausgehend von der Mitte des Bauteils (60) zu den gleithülsenseitigen Stirnflächen zunehmend auf. Die Wandung der Ausnehmung (67) ist eine doppelt gekrümmte Schale, deren Form z.B. einem zentrumsnahen Teilbereich eines Torus entspricht. Die in der Zeichnungsebene der Figur 3 gelegene Krümmung hat einen Radius, der kleiner ist als der Radius der Drahtseilkrümmung abzüglich des Drahtseilradius.

Soll das Führungselement ein Zugmittel z.B. in Form einer Gelenk- oder Gliederkette sein, wird die Ausnehmung des Zwischenstützelements (60, 70, 80, 90) an die Querschnittsform des Zugmittels und an den kleinsten Krümmungsradius des Führungselements (10, 11) angepasst. Ein derartiges Zugmittel krümmt sich in der Regel nur in einer Ebene. Findet das dämpfende Zusammenschieben der Feder-Dämpferelemente (40, 50) auf einem Abschnitt einer Kreisbahn statt, können die Stirnseiten (81, 82) gewölbt ausgeführt werden. Die Wölbung (78), vgl. Figur 3, hat die Form eines Zylindermantelabschnitts, dessen Mittellinie die Zeichnungsebene der Figur 3 senkrecht schneidet und zugleich auf der Verlängerung der Mittellinie (69, 79) der jeweiligen Gleithülse (63, 73) liegt. Die Flächenpressung zwischen zwei einander kontaktierenden Stirnseiten (81, 82) ist minimal, wenn der Krümmungsradius der Wölbung (78) gleich oder geringfügig kleiner ist als der aus der folgenden Formel berechnete Radius "r":

Der Radius "r" basiert auf dem Krümmungsradius "R" der Mittellinie (19), dem Durchmesser "d" und der Wandstärke "b" des Tellers (61). Über die Hilfsgrößen "p" und "q" wird "r" ermittelt

$$r = (p * (p + q))^{(1/2)},$$

wobei

$$q = \frac{d}{2} * \left(\frac{0,5\ b}{R - 0,5\ d}\right)$$

$$p = \frac{(0,5\ d)^2}{q}$$

und ist.

Wird anstelle der Kette ein im Raum gekrümmtes Stahlseil benutzt, wird der Zylindermantelabschnitt durch eine sphärische Krümmung ersetzt. Die Bedingungen für den Radius "r" bleiben erhalten.

In Figur 10 wird ein Feder-Dämpfersystem gezeigt, bei dem anstelle der Strukturdämpfer (40) die Strukturdämpfer (50) eingesetzt werden. Da bei diesen Strukturdämpfern (50) die Innenausnehmung endseitig unterschiedlich große Innendurchmesser haben, ist es erforderlich, entsprechend passend gestaltete Zwischenstützelemente (70) zu verwenden. Das gezeigte Zwischenstützelement (70) hat dabei eine gestufte Gleithülse (73). Das z.B. 10 mm kurze, linke Ende der Gleithülse (73) ist ein kurzes Gleithülsenrohr (75), das z.B. einen Außendurchmesser von 14 mm hat und in die Bohrung (56) der Bodenscheibe (54) hineinragt. Das rechte Ende der Gleithülse (73) hat als 12 mm langes Gleithülsenrohr (76) einen Außendurchmesser von 23,8 mm. An ihm stützt sich der linke Endbereich der Innenausnehmung (58) des Strukturdämpfers (50) ab.

Die Führungsstange (10) hat in diesem Ausführungsbeispiel einen Außendurchmesser von 10 mm. Der linke, äußere Strukturdämpfer (50) stützt sich in Figur 10 an einem Endstützelement (100) ab. Das Endstützelement (100) ist z.B. eine Scheibe, dessen zentrale Bohrung (101) das Führungselement (10) z.B. kraftschlüssig umgibt. An ihm ist zur Positionierung des Strukturdämpfers (50) ein kurzes Gleithülsenrohr (75) angeformt.

Am rechten, äußeren Strukturdämpfer (50) liegt ein Endstützelement (110) an, das z.B. ebenfalls die Form einer Scheibe hat. Allerdings ist hier rechtsseitig ein langes Gleithülsenrohr (76) angeordnet, das in die große Öffnung der Innenausnehmung (58) des Strukturdämpfers (50) eingreift. Die zentrale Bohrung (111) des Endstützelements (110) sitzt mit einem Spiel von 0,1 bis 0,2 mm auf der Führungsstange. An diesem Endstützelement (110) steht die - hier nicht dargestellt - abzufedernde bzw. abzudämpfende Last an.

In Figur 7 wird ein Feder-Dämpfungssystem gezeigt, bei dem die Strukturdämpfer (40) sich an Zwischenstützelementen (80) abstützen, die bezüglich ihrer Symmetrie und groben Abmessungen mit den Zwischenstützelementen (60) vergleichbar sind. Allerdings haben die Zwischenstützelemente (80) im Bereich der Stirnseiten (81, 82) der Gleithülse (63) angeformte Hintergriffselemente (86), vgl. Figur 9. Beispielsweise sind am stirnseitigen Rand, entlang dem Umfang, fünf elastische Hintergriffselemente (86) angeordnet. Dazu weist die Gleithülse (63) endseitig theoretisch jeweils eine Eindrehung (83) mit einer planen Bundfläche (85) auf. Die Eindrehung (83) lässt über die gesamte Gleithülsenlänge im Endbereich so viel Material stehen, dass dort ein rohrförmiger Endabschnitt (84) entsteht, der bei einem Außendurchmesser von 18 mm z.B. 4 mm lang ist. Dadurch bleibt die Länge der Bohrung (64) erhalten. Über die freien Stirnflächen der Endabschnitte (84) können sich die Zwischenstützelemente (80) bei maximaler Kompression des Feder-Dämpfersystems gegenseitig kontaktieren.

Im radial äußeren Bereich der planen Bundfläche (85) sind die einzelnen Hintergriffselemente (86) auf beiden Seiten der Gleithülse (63) so angeformt, dass sie pro Seite von der Bundfläche (85) aus nach außen abstehen. Die äußere Hüllfläche der Hintergriffselemente (86) bildet eine kegelstumpfmantelförmige Fläche, deren Kegelwinkel z.B. 14,3 ± 2 Winkelgrade misst. Die Spitze des gedachten Kegels liegt jeweils auf der anderen Seite des Tellers (61). Die einzelnen Hintergriffselemente (86) sind durch schmale Schlitze (87) voneinander getrennt, die sich bis zur Bundfläche (85) erstrecken. Da die Hintergriffselemente (86) eine Wandstärke haben, die kleiner ist als die radiale Ausdehnung der Eindrehung (83), sie misst z.B. 2 mm, befindet sich radial zwischen dem Endabschnitt (84) und den Hintergriffselementen (86) ein Ringkanal (88) mit einem rechteckigen oder trapezförmigen Querschnitt.

Die Zwischenstützelemente (80) und (90) werden zur Schaffung elastischer Hintergriffselemente z.B. aus einem Polyamid, einem Polyethylen oder aus einem vergleichbar elastischen Werkstoff gefertigt. Ggf. kann der Werkstoff zumindest bereichsweise mit Glas- oder Kohlefasern angereichert sein.

In Figur 7 sind beispielsweise fünf Strukturdämpfer (40) gezeigt, die neben der wechselweisen Anordnung auch noch axial spielfrei und vorgespannt auf dem Führungselement (10) angeordnet sind. Dazu hat die Führungsstange (10) an ihrem linken Ende einen Wellenbund (12), an dem das erste Zwischenstützelement (80) anliegt. Das linke Wellenende hat einen größeren Durchmesser als der mittlere Bereich der Führungsstange (10), auf dem die Zwischenstützelemente (80) gleiten können. Vor dem rechts außen liegenden Strukturdämpfer (40) ist anstelle eines Zwischenstützelementes (80) ein topfförmiges Endstützelement (120) angeordnet. Der Boden (121) und die linke Seite dieses Endstützelements (120) entsprechen den hier verwendeten Zwischenstützelementen (80). Allerdings ist an der rechten Seite des Tellers (61) ein Stützrohr (122) angeformt oder befestigt. Der Innendurchmesser des Stützrohres (122) ist größer als der maximale Außendurchmesser eines auf der Führungsstange (10) eingerasteten Sicherungsrings (127). Zwischen dem Sicherungsring (127) und dem Wellenbund (12) sitzen die Strukturdämpfer (40) unter einer vorgegebenen Vorspannung.

Der Sicherungsring (127) sitzt auf der Führungsstange (10) in einer üblichen Ringnut (13). In Belastungsrichtung vor der Ringnut (13) befindet sich eine umlaufende Kerbentlastungsnut (14), deren in Figur 7 dargestellter Querschnitt halbkreisförmig gestaltet ist. Die Einschnürung durch die Kerbentlastungsnut (14) ist größer als die der Ringnut (13), so dass die Kerbwirkung letzterer weitgehend eliminiert wird.

Im Belastungsfall nach Figur 7 wirkt die abzufedernde bzw. abzudämpfende Last auf die rechtsseitige Stirnfläche (125) des Endstützelementes (120). Soll die Abfederung bis zum gegenseitigen Kontaktieren der Zwischenstützelemente (80) erforderlich sein, errechnet sich die minimale Länge des Stützrohres (122) aus dem Produkt, das aus der Anzahl der Strukturdämpfer (40) und dem maximalen freien Abstand besteht, der zwischen zwei benachbarten Gleithülsen (63) liegt.

In Figur 15 wird ein mit Figur 10 teilweise vergleichbares Feder-Dämpfersystem dargestellt. Allerdings sind hier beide Stirnseiten (81, 82) der gestuften Gleithülse (73) der Zwischenstützelemente (90) mit die Strukturdämpfer (50) einhakenden Hintergriffselementen (86, 96) ausgestattet. Die Hintergriffselemente (86) der jeweils linken Gleithülsenstirnseiten (81) sind in Figur (16) gezeigt. Sie entsprechen bezüglich ihres konstruktiven Aufbaus weitgehend den aus Figur 9 bekannten Hintergriffselementen (86).

Bei den Hintergriffselementen (86) der - nach Figur 15 - jeweils rechten Seiten der gestuften Gleithülsen (73) handelt es sich um z.B. sechs Elemente, die an der theoretisch planen Bundfläche (95) der gestuften bzw. verkürzten Gleithülse (73) im Wesentlichen in Axialrichtung abstehen. Die Bundfläche (95) ist normal zur Mittellinie (19) orientiert. Die äußere Hüllfläche der Hintergriffselemente (96) bildet auch hier eine kegelstumpfmantelförmige Fläche, deren Kegelwinkel z.B. 14,3 ± 2 Winkelgrade misst. Die Spitze des gedachten Kegels liegt jeweils auf der anderen Seite des Tellers (61). Die einzelnen Hintergriffselemente (96) sind durch schmale Schlitze (87) voneinander getrennt, die sich bis zur Bundfläche (95) erstrecken. Die freien Enden der radial nach außen aufgefederten Hintergriffselemente (96) sind plane Teilflächen (98) einer planen Kontakthüllfläche, über die - bei auf Block liegenden Strukturdämpfern (50) - das jeweils rechtsseitige Gleithülsenende des einen Zwischenstützelements (90) das linksseitige Gleithülsenende des danebenliegenden Zwischenstützelements (90) kontaktiert.

Die Wandstärke der einzelnen Hintergriffselemente (96) ist beispielsweise konstant, so dass die Innenflächen (99) der Hintergriffselemente (96) die Führungsstange (10) nicht kontaktieren.

In den dargestellten Ausführungsbeispielen sind die Führungselemente (10, 11) nur beispielhaft horizontal dargestellt. Selbstverständlich können die Führungselemente auch vertikal oder windschief im Raum positioniert sein.

Bezugszeichenliste:

| | |
|---|---|
| 10 | Führungselement, Führungsstange, formsteif |
| 11 | Führungselement, Drahtseil, flexibel |
| 12 | Wellenbund |
| 13 | Ringnut |
| 14 | Kerbentlastungsnut |
| 18 | Querschnittsform, Querschnitt |
| 19 | Mittellinie |
| 40 | Feder-Dämpferelemente, Dämpferglieder, Strukturdämpfer, Axialdämpfer, Dämpfer |
| 41, 42 | Stirnseiten; links, rechts |
| 43 | Außenwandung |
| 48 | Innenausnehmung, Strukturdämpferausnehmung |

49 Innenraum

50 Feder-Dämpferelemente mit Taille, Dämpferglieder, Strukturdämpfer, Axialdämpfer, Dämpfer
51, 52 Stirnseiten; links, rechts
53 Außenwandung
54 Bodenscheibe
55 Bodenfläche
56 Bohrung, zentral
57 Taille, Einschnürung
58 Innenausnehmung

60 Zwischenstützelemente, symmetrisch, Bauteil
61 Teller
62 Planfläche, Tellerfläche, Stirnseite
63 Gleithülse
64 Bohrung, zylindrisch, Ausnehmung
65 Außenwandung, radial
67 Ausnehmung, bereichsweise torusmantelförmig
68 Winkelnut
69 Mittellinie

70 Zwischenstützelemente, asymmetrisch
73 Gleithülse, gestuft
75 Gleithülsenrohr, kurz, kleiner Außendurchmesser
76 Gleithülsenrohr, lang, großer Außendurchmesser
78 Wölbung, gestrichelt dargestellt
79 Mittellinie

80 Zwischenstützelemente mit Hintergriffen, symmetrisch,
81, 82 Stirnseiten; links, rechts von (60, 70, 80, 90)
83 Eindrehung
84 Endabschnitt
85 Bundfläche, plan
86 Hintergriffselemente
87 Schlitze
88 Ringkanal

90 Zwischenstützelemente mit Hintergriffen, asymmetrisch
95 Bundfläche, plan
96 Hintergriffselemente, klein
97 Schlitze
98 Teilflächen
99 Innenflächen

100 Endstützelement, links
101 Bohrung, zentral

110 Endstützelement, rechts
111 Bohrung, zentral

120 Endstützelement, topfförmig
121 Boden
122 Stützrohr
125 Stirnfläche, Lastauflage

127 Sicherungsring

**Patentansprüche**

1. Feder-Dämpfersystem aus mehreren hintereinander angeordneten Feder-Dämpferelementen (40, 50), die entlang mindestens eines Führungselements (10, 11) geführt sind,

- wobei das oder die Führungselemente (10, 11) starre Führungsprofile oder biegbare Zugmittel sind,
- wobei das jeweilige Feder-Dämpferelement (40, 50) in Form eines Strukturdämpfers ausgebildet ist,
- wobei die sich zwischen den Stirnseiten (41, 42) des Feder-Dämpferelement (40, 50) gelegene im mittleren Bereich nach außen gewölbte Innenausnehmung (48) eines Feder-Dämpferelements (40, 50) das oder die Führungselemente (10, 11) umschließt,
- wobei zwischen jeweils zwei hintereinander angeordneten Feder-Dämpferelementen (40, 50) ein Zwischenstützelement (60, 70, 80, 90) angeordnet ist,
- wobei die Zwischenstützelemente (60, 70, 80, 90) an den Führungselementen (10, 11) gleitfähig geführt sind,
- wobei das einzelne Zwischenstützelement (60, 70, 80, 90) einen Teller (61) hat, an dessen Stirnseiten (62) jeweils ein Feder-Dämpferelement (40, 50) anliegt und
- wobei das einzelne Zwischenstützelement (60, 70, 80, 90) eine Gleithülse (63, 73) hat, deren Bohrung (64) oder Ausnehmung (67) das jeweilige Führungselement (10, 11) kontaktiert und an dessen radialer Außenwandung (65) das jeweilige Feder-Dämpferelement (40, 50) zumindest bereichsweise anliegt.

2. Feder-Dämpfersystem gemäß Anspruch 1, **dadurch gekennzeichnet, dass** die freien Enden der endseitigen Feder-Dämpferelemente (40, 50) an Endstützelementen (100, 110) anliegen, deren den Feder-Dämpferelementen (40, 50) zugewandte geometrische Form der analogen Seite eines entsprechenden Zwischenstützelements (60, 70, 80, 90) entspricht.

3. Feder-Dämpfersystem gemäß Anspruch 1, **dadurch gekennzeichnet, dass** das einzelne Feder-Dämpferelement (40, 50) aufgrund seiner Materialeigenschaften nach jeder funktionsbedingten Belastung in seine Ausgangslage zurückkehrt und somit auch ein Rückholsystem bildet.

4. Feder-Dämpfersystem gemäß Anspruch 1, **da-**

**durch gekennzeichnet, dass** das einzelne Feder-Dämpferelement (40, 50) eine rohr- und/oder topfförmige Gestalt hat und in der Hauptsache axial belastbar ist.

5. Feder-Dämpfersystem gemäß Anspruch 1, **dadurch gekennzeichnet, dass** für das einzelne Feder-Dämpferelement (40, 50) ein auf einem CoPolyester basierender thermoplastischer Elastomer (TPC) verwendet wird, dessen Härte in Shore zwischen 40D und 55D liegt.

6. Feder-Dämpfersystem gemäß Anspruch 1, **dadurch gekennzeichnet, dass** jede Gleithülse (63, 73) mindestens an einem Ende mindestens zwei elastisch federnde Hintergriffselemente (86, 96) aufweist.

**Claims**

1. Spring/damper system consisting of a plurality of spring/damper elements arranged one behind the other (40, 50), which are guided along at least one guide element (10, 11),

   - wherein the guide element (s) (10, 11) are rigid guide profiles or bendable traction mechanisms,
   - wherein the respective spring/damper element (40, 50) is designed in the form of a structural damper,
   - wherein between the front sides (41, 42) of the spring/damper element (40, 50) located in the middle area outwardly curved inner recess (48) of a spring/damper element (40, 50) encloses the guide element(s) (10, 11),
   - wherein an intermediate support element (60, 70, 80, 90) is arranged between two successively arranged spring/damper elements (40, 50),
   - wherein the intermediate support elements (60, 70, 80, 90) are guided in a slidable manner on the guide elements (10, 11),
   - wherein the individual intermediate support element (60, 70, 80, 90) comprises a plate (61), on the front sides of which (62) a spring/damper element (40, 50) is attached, and
   - wherein the individual intermediate support element (60, 70, 80, 90) comprises a sliding sleeve (63, 73), whose bore hole (64) or recess (67) comes into contact with the respective guide element (10, 11) and on whose radial outer wall (65) the respective spring/damper element (40, 50) is at least partially attached.

2. Spring/damper system according to Claim 1, **characterized in that** the free ends of the face-side spring/damper elements (40, 50) rest on end support elements (100, 110), whose geometric shape facing the spring/damper elements (40, 50) corresponds to the analogous side of a corresponding intermediate support element (60, 70, 80, 90).

3. Spring/damper system according to Claim 1, **characterized in that** the individual spring/damper element (40, 50) returns to its initial position due to its material properties after each function-related load and thus also forms a retrieval system.

4. Spring/damper system according to Claim 1, **characterized in that** the individual spring/damper element (40, 50) has a tubular and/or pot-shaped shape and is mainly axially resilient.

5. Spring/damper system according to Claim 1, **characterized in that**, for the individual spring/damper element (40, 50), a copolyester-based thermoplastic elastomer (TPC) is used, the Shore hardness of which is between 40D and 55D.

6. Spring/damper system according to Claim 1, **characterized in that** each sliding sleeve (63, 73) comprises at least two elastically spring-loaded rear grip elements (86, 96) at least at one end.

**Revendications**

1. Système amortisseur à ressort, constitué de plusieurs éléments amortisseurs à ressort (40, 50), placés les uns derrière les autres, qui sont guidés le long d'au moins un élément de guidage (10, 11),

   - le ou les éléments de guidage (10, 11) étant des profilés de guidage rigides ou des moyens de traction flexibles,
   - l'élément amortisseur à ressort (40, 50) en question étant conçu sous la forme d'un amortisseur de structure,
   - l'évidement intérieur (48) d'un élément amortisseur à ressort (40, 50), situé entre les faces frontales (41, 42) de l'élément amortisseur à ressort (40, 50), recourbé vers l'extérieur dans la zone centrale entourant le ou les éléments de guidage (10, 11),
   - entre chaque fois deux éléments amortisseurs à ressort (40, 50), placés respectivement l'un derrière l'autre étant placé un élément de soutien intermédiaire (60, 70, 80, 90),
   - les éléments de soutien intermédiaires (60, 70, 80, 90) étant guidés de manière coulissante sur les éléments de guidage (10, 11),
   - l'élément de soutien intermédiaire (60, 70, 80, 90) individuel disposant d'un disque (61), sur les faces frontales (62) duquel s'applique chaque fois un élément amortisseur à ressort (40, 50) et
   - l'élément de soutien intermédiaire (60, 70, 80, 90) individuel disposant d'un manchon coulissant (63, 73), dont le perçage (64) ou l'évidement (67) est en contact avec l'élément de guidage (10, 11) concerné et sur la paroi extérieure (65) radiale duquel l'élément amortisseur à ressort (40, 50) concerné s'appuie au moins par endroits.

2. Système amortisseur à ressort selon la revendication 1, **caractérisé en ce que** les extrémités libres des éléments amortisseur à ressort (40, 50) d'extrémité s'appuient sur des éléments de soutien d'extrémité (100, 110), dont la forme géométrique qui fait face aux éléments amortisseurs à ressort (40, 50) correspond à la face analogue d'un élément de soutien intermédiaire (60, 70, 80, 90) correspondant.

3. Système amortisseur à ressort selon la revendication 1, **caractérisé en ce que**, du fait de ses caractéristiques de matière, après chaque contrainte fonctionnelle, l'élément amortisseur à ressort (40, 50) individuel retourne dans sa position initiale et forme ainsi également un système de rappel.

4. Système amortisseur à ressort selon la revendication 1, **caractérisé en ce que** l'élément amortisseur à ressort (40, 50) individuel présente une forme tubulaire et/ou en pot et est prioritairement susceptible d'être contraint en direction axiale.

5. Système amortisseur à ressort selon la revendication 1, **caractérisé en ce que** pour l'élément amortisseur à ressort (40, 50) individuel, l'on utilise un élastomère thermoplastique (TPC) à base d'un copolymère, dont la dureté shore se situe entre 40D et 55D.

6. Système amortisseur à ressort selon la revendication 1, **caractérisé en ce que** chaque manchon coulissant (63, 73) comporte au moins sur une extrémité au moins deux éléments d'accrochage par l'arrière (86, 96) à fléchissement élastique.

# Fig. 1

# Fig. 2

# Fig. 3

**Fig. 4**  **Fig. 5**  **Fig. 6**

40 43 42 48    41    40    65 63 61 60 64 69

**Fig. 7**

12    63 61    127 120 125

81 80 82 40 86 86    121 13 14 122

**Fig. 9**

68
65
63
60
62

**Fig. 8**

61
64
86
69
88

83, 85 63 87 84 82

**Fig. 10**

100  101  75  50  70  10  76  111  110

**Fig. 11**

50  53  52  58

**Fig. 12**

55  51  54  56  57

**Fig. 13**

73  75  70

**Fig. 14**

76  73  70

**Fig. 15**

50   90   61

19   81   82   86   73   96   10

**Fig. 16**

**Fig. 17**

65

96

99

79

98

86

79   81   65   90

95   97   90

10

40   60

**Fig. 18**

**EP 3 232 080 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009012684 A1
- EP 2184508 A1
- EP 0019533 A1
- GB 2079400 A
- US 2010059470 A1
- US 4200268 A
- US 2639141 A